# EUROPEAN PATENT APPLICATION

(11) **EP 3 747 762 A1**
(43) Date of publication of application: **09.12.2020**
(21) Application number: 20156956.3
(22) Date of filing: 12.02.2020
(51) Int. Cl.: B64C 9/16, B64C 3/28

(54) **WING OF AIRCRAFT AND AIRCRAFT**

(30) Priority: 04.06.2019 JP 2019104740
(71) Applicant: Mitsubishi Heavy Industries, Ltd., Chiyoda-ku Tokyo 100-8332 (JP)
(72) Inventor: YOSHIMOTO, Minoru, Tokyo, 100-8332 (JP)
(74) Representative: Henkel & Partner mbB

(57) **Abstract**

A wing 100 includes a main wing element 10, a flap 31 disposed on a rear side of the main wing element 10, a storage section 101 disposed in the main wing element 10 to retract the flap 31, fairings 33 each of which is disposed under the storage section 101 and covers a flap-moving mechanism 32 for moving the flap 31, and a shielding member 40 which is disposed in the storage section 101 at a position between the fairings 33 and blocks air flowing in the storage section 101 in the wing span direction. With this configuration, the shielding member 40 disposed in the storage section 101 can block a fluctuating airflow before pressure fluctuations occur in a feedback manner within the storage section 101. As a result, it is possible to suppress the occurrence of self-excited vibrations, and to suppress large pressure fluctuations at specific frequencies.

## Description

### Field

The present invention relates to wings of aircrafts and aircrafts.

### Background

As known in the conventional art, high-lift devices such as slats and flaps are deployed on the leading edge side and the trailing edge side, respectively, of wings in order to generate a high lift when an aircraft is navigated at low speed during takeoff and landing. For example, Patent Literature 1 discloses a wing of an aircraft including a flap and a cavity which serves as a storage section to retract the flap during undeployed.

### Citation List

### Patent Literature

Patent Literature 1: US Patent No. 5050822

### Summary

### Technical Problem

In the storage section which retracts flap formed in the wing, a spiral airflow is generated along one of the wing span directions. The wing also has, below the flap and the storage section, a fairing which covers a moving device for moving the flap. In the vicinity where a fairing is disposed, air travels along the side of the fairing into the storage section to give rise to airflow fluctuations, and such airflow fluctuations move through the airflow toward the downstream. The airflow fluctuations which have moved inside the storage section induce pressure fluctuations because steps are formed by the shape of a nearby downstream fairing. The pressure fluctuations are transmitted as sonic waves toward the upstream and produce additional airflow fluctuations near the upstream fairing. As a result, self-excited vibrations are generated in a feedback manner in the storage section, and pressure fluctuations at specific frequencies are enlarged to possibly cause noise and airframe vibrations.

The present invention has been made in light of the circumstances discussed above. It is therefore an object of the present invention to suppress noise and airframe vibrations caused by pressure fluctuations in the storage section which retracts the flap.

### Solution to Problem

To solve the problem and achieve the object above, a wing of an aircraft of the present disclosure comprises; a main wing element; a flap disposed on a rear side of the main wing element; a storage section disposed in the main wing element to retract the flap; fairings each of which is disposed under the storage section and covers a mechanism for moving the flap; and a shielding member which is disposed in the storage section at a position between the fairings and blocks at least part of air flowing in the storage section in a wing span direction.

To solve the problem and achieve the object above, an aircraft of the present disclosure comprises the wing of the aircraft.

### Advantageous Effects of Invention

The wing of the aircraft and the aircraft according to the present invention can effectively suppress noise and airframe vibrations caused by pressure fluctuations in the storage section which retracts the flap. Brief Description of Drawings
FIG. 1 is a view schematically illustrating the periphery of a wing of an aircraft according to an embodiment.
FIG. 2 is a perspective view schematically illustrating chief components of the wing of the aircraft according to the embodiment.
FIG. 3 is a perspective view illustrating an example of flaps.
FIG. 4 is a perspective view illustrating another example of flaps.
FIG. 5 is a view illustrating an example of results from numerical analysis of pressure fluctuations within a storage section of the wing according to the embodiment.
FIG. 6 is a view illustrating an example ofresults from numerical analysis of pressure fluctuations within a storage section of a wing according to a comparative example.
FIG. 7 is a diagram illustrating acoustic spectrum of pressure fluctuations at a predetermined position within a storage section, based on results from numerical analysis similar to those in FIG. 5 and FIG. 6.
FIG. 8 is a view illustrating an example of shielding members according to a first modified example.
FIG. 9 is a view illustrating an example of shielding members according to a second modified example.
FIG. 10 is a view illustrating an example of the shielding members according to the second modified example.
FIG. 11 is a view illustrating an example of the shielding members according to the second modified example.
FIG. 12 is a view illustrating an example of the shielding members according to the second modified example.

### Description of Embodiments

Hereinbelow, embodiments of a wing of an aircraft and an aircraft according to the present invention will be described in detail based on drawings. However, it should be construed that the present invention is not limited by such embodiments.

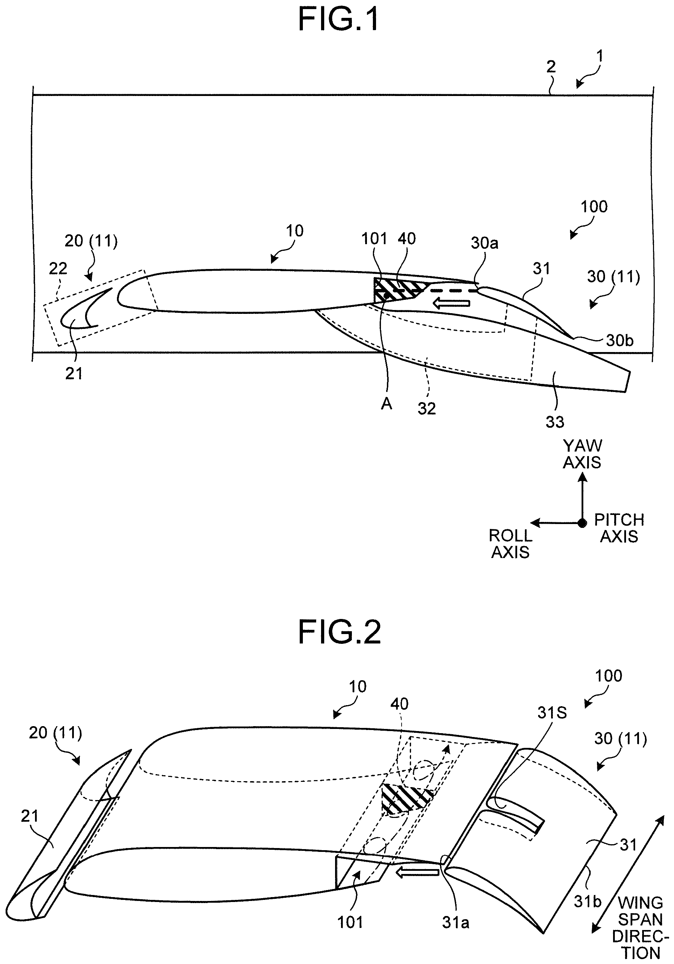

FIG. 1 is a view schematically illustrating the periphery of a wing of an aircraft according to an embodiment. FIG. 2 is a perspective view schematically illustrating chief components of the wing of the aircraft according to the embodiment. As illustrated in FIG. 1, the aircraft 1 according to the present embodiment includes a fuselage 2, a wing 100, and other components such as a horizontal tail and a vertical tail which are not illustrated. The fuselage 2 is a cylindrical component which extends in the roll axis direction, which is a direction connecting the nose and the tail of the aircraft 1. The wing 100 is an airfoil component which is disposed so that a lift will be transmitted to the fuselage 2 and which extends outward from the fuselage 2 in the pitch axis direction perpendicular to the roll axis direction. As illustrated in FIG. 1 and FIG. 2, the wing 100 includes a main wing element 10 and a high-lift device 11.

### Main wing element

The main wing element 10 is a main constituent structure of the wing 100. The main wing element 10 is formed with an airfoil-shape in a cross section perpendicular to the pitch axis direction. The outer wing surface of the main wing element 10 includes an upper wing face which lies on the upper side in the yaw axis direction perpendicular to the roll axis direction and the pitch axis direction, a lower wing face which lies on the lower side in the yaw axis direction, and a front wing face which lies on the front side in the roll axis direction.

Further, in the present embodiment, the main wing element 10 has a storage section 101. The storage section 101 is disposed on the rear side of the main wing element 10 so as to form a space in which a flap 31 of a flap device 30 described later is partially retracted in the main wing element 10 when the flap 31 is placed in a retracted position. As illustrated in FIG. 1 and FIG. 2, the storage section 101 is disposed between the upper wing face and the lower wing face and extends along the wing span direction (see FIG. 2). The storage section 101 extends over the entire region in which the flaps 31 are disposed. Further, in the present embodiment, a shielding member 40 is disposed inside of the storage section 101. Details such as shape and position of the shielding member 40 will be described later.

### High-lift device

The high-lift device 11 is a device which increases the lift on the wing 100 to prevent the aircraft 1 from stalling when the aircraft 1 is navigated at low speed, for example, when the aircraft 1 is taking off or landing. The high-lift device 11 includes a slat device 20 disposed on a front side of the main wing element 10, and a flap device 30 disposed on a rear side of the main wing element 10.

### Slat device

The slat device 20 includes a slat 21, and a slat-moving mechanism 22 which moves the slat 21. The slat 21 comprises a leading edge section of the wing 100, and is disposed on the front side of the main wing element 10. The slat 21 is disposed so as to extend in the pitch axis direction. The slat-moving mechanism 22 moves the slat 21 between the forward deployed position (the position illustrated in FIG. 1) and the rearward retractedposition. The deployed position is a position in which the slat 21 is deployed forward during takeoff and landing (low-speed navigation) of the aircraft 1. The retracted position is a position in which the slat 21 is retracted rearward during cruising (high-speed navigation) of the aircraft 1.

### Flap device

The flap device 30 includes a flap 31, a flap-moving mechanism 32 which move the flap 31, and a fairing 33.

The flap 31 is disposed on a rear side of the main wing element 10. The plural flaps 31 are disposed with intervals therebetween in the wing span direction of the wing 100. As illustrated in FIG. 1, the flap 31 is formed with an airfoil-shape in a cross section perpendicular to the pitch axis direction. The flap 31 includes a leading edge 31a on the front side in the roll axis direction, and a trailing edge 31b on the rear side in the roll axis direction.

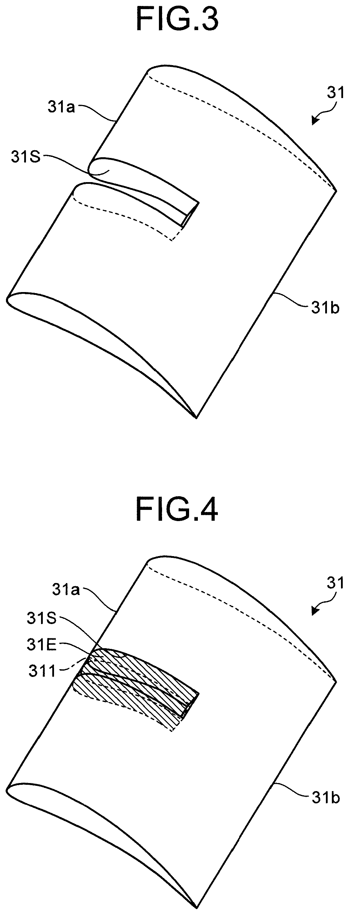

FIG. 3 is a perspective view illustrating an example of the flaps. As illustrated, the flap 31 has a slit section 31S (a first slit section) extending from the leading edge 31a toward the trailing edge 31b side. The slit section 31S is disposed to avoid interference between the flap 31 and the shielding member 40 described later in a condition where the flap 31 is retracted in the storage section 101. For this purpose, the slit section 31S is formed with a length that is at least not less than the length of the shielding member 40 in its extending direction.

FIG. 4 is a perspective view illustrating another example of the flaps. As illustrated, the flap 31 may be such that an elastic member 31E is disposed in the peripheral edge of the slit section 31S. The elastic member 31E is formed of a flexible material such as, for example, rubber and is disposed so as to fill the entirety of the slit section 31S. In this regard, as indicated by an alternate long and short dashed line in the drawing, the elastic member 31E has an incision 311 that extends in the extending direction of the slit section 31S. The incision 311 is formed at a position that overlaps with the shielding member 40 described later as viewed in the roll axis direction. Further, the incision 311 is formed with a length that is equal to or more than the length of the shielding member 40 in its extending direction. As a result of this configuration, the incision 311 disposed in the elastic member 31E enables the flap 31 illustrated in FIG. 4 to avoid interference with the shielding member 40 when the flap 31 is retracted in the storage section 101.

The flap-moving mechanism 32 moves the flap 31 between the rearward deployed position (the position illustrated in FIG. 1) and the forward retracted position. The flap-moving mechanisms 32 are attached to the main wing element 10 in one-to-one relationship with the flaps 31. The deployed position is a position in which the flap 31 is deployed rearward during takeoff and landing (low-speed navigation) of the aircraft 1. The retracted position is a position in which the flap 31 is retracted forward during cruising (high-speed navigation) of the aircraft 1. The flap 31 moved to the deployed position forms a gap from the main wing element 10. On the other hand, the flap 31 moved to the retracted position is retracted in the storage section 101 formed in the main wing element 10 such that the upper wing face of the main wing element 10 and part of the upper face of the flap 31 form a continuous surface.

The fairing 33 is a member which covers the flap-moving mechanism 32 from outside to prevent the flap-moving mechanism 32 from exposure to outside air. The fairing 33 is attached to the main wing element 10 via an attachment section that is not illustrated.

The shielding member 40 is a plate member formed of, for example, a metal material, and is disposed in the storage section 101. In the present embodiment, the shielding member 40 extends along the direction in which the flap 31 is moved (the right and left directions in FIG. 1). As illustrated in FIG. 1 and FIG. 2, the shielding member 40 is attached in contact with each face of the storage section 101 without any gaps. As a result of this configuration, the shielding member 40 blocks air flowing in the storage section 101 along the wing span direction as illustrated by an alternate long and short dashed line in FIG. 2. The material and shape of the shielding member 40 are not limited to the above. The shielding member 40 may be formed of a material other than metal materials, for example, a fabric material, as long as the shielding member 40 can retain its shape in the storage section 101 and can block the airflow. The shielding member 40 is not limited to a plate member and may be a member having a large thickness in the extending direction of the storage section 101, for example, a cuboid. The shielding member 40 may have a gap from the storage section 101 and may extend to outside of the storage section 101, as long as the shielding member 40 can sufficiently block the airflow.

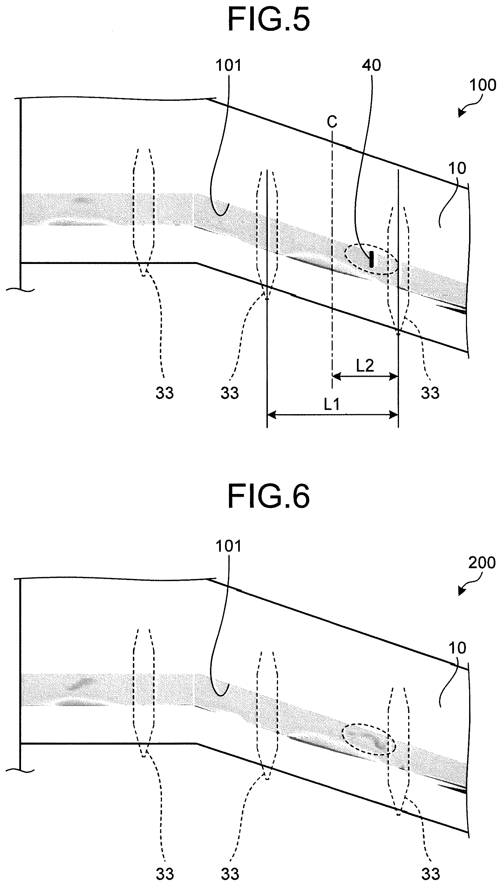

The position at which the shielding member 40 is disposed in the present embodiment will be described. The shielding member 40 is disposed in the storage section 101 so as to be positioned between the plural fairings 33 (see FIG. 5). More specifically, the shielding member 40 is disposed downstream, along the direction of flow of air inside the storage section 101, of the center C between the fairings 33 in the wing span direction (see FIG. 5). That is, the shielding member 40 is disposed in the range from the center C to the distance L2 (= 1/2·L1) where L1 is the distance between the fairings 33. In the present embodiment, the wing 100 is an airfoil having a sweepback angle and a dihedral angle. Thus, air in the storage section 101 flows from the fuselage 2 side of the aircraft 1 to the side opposite to the fuselage 2. Incidentally, if the wing 100 is an airfoil having a sweepforward angle and an anhedral angle, air in the storage section 101 can flow from the side opposite to the fuselage 2 of the aircraft 1 to the fuselage 2 side.

### Numerical analysis results

FIG. 5 is a view illustrating an example of results from numerical analysis of pressure fluctuations within the storage section of the wing according to the present embodiment. FIG. 6 is a view illustrating an example of results from numerical analysis of pressure fluctuations within a storage section of a wing representing a comparative example. The wing 200 as a comparative example illustrated in FIG. 6 is that the shielding member 40 is removed from the wing 100 of the present embodiment. Other configurations of the wing 200 are the same as those of the wing 100, and thus the description of the wing 200 will be omitted. The same reference numerals will be used for the same constituent elements. FIG. 5 and FIG. 6 illustrate the pressure on a cross section of the storage section 101 indicated by a broken line in FIG. 1.

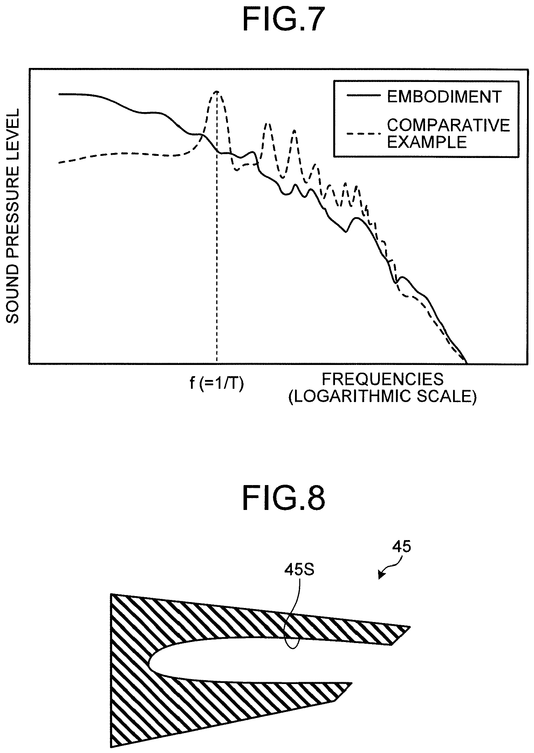

FIG. 7 is a diagram illustrating acoustic spectrum of pressure fluctuations at a predetermined position within the storage section, based on results from numerical analysis similar to those in FIG. 5 and FIG. 6. In FIG. 7, the analysis results are at the position of Point A in FIG. 2 at the center C between the fairings 33, the analysis result of the wing 100 according to the present embodiment is shown by a solid line and the analysis result of the wing 200 as a comparative example is shown by a broken line.

First, as illustrated by an alternate long and short dashed line in FIG. 2, a spiral airflow is generated along the wing span direction in the storage section 101 disposed in the wings 100, 200. In the present embodiment, as described hereinabove, the wings 100, 200 have a sweepback angle and a dihedral angle. Thus, air in the storage section 101 flows from the fuselage 2 side of the aircraft 1 to the side opposite to the fuselage 2. Further, the wings 100, 200 have, below the flap 31 and the storage section 101, a fairing 33 which covers a flap-moving mechanism 32 for moving the flap 31. In the vicinity of the location in which the fairing 33 is disposed, air travels along the side of the fairing 33 and flows into the storage section 101 to give rise to airflow fluctuations, and such airflow fluctuations move through the airflow toward the downstream. The airflow fluctuations which have moved inside the storage section 101 induce pressure fluctuations because steps are formed by the shape of a nearby downstream fairing 33. The pressure fluctuations are transmitted as sonic waves toward the upstream and produce additional airflow fluctuations near the upstream fairing 33. As a result, self-excited vibrations are generated in a feedback manner in the storage section 101, and pressure fluctuations at specific frequencies are enlarged to possibly cause noise and airframe vibrations.

For example, as illustrated in the region enclosed by a broken line in FIG. 6, the wing 200 as a comparative example visibly has pressure fluctuations within the storage section 101. As shown in FIG. 7, the acoustic spectrum of the pressure fluctuations in the wing 200 clearly have a plurality of peaks. The pressure fluctuations are large at a frequency f (= 1/T) and harmonic frequencies of the frequency f where T is the period which is the sum of the time in which the air flows from the upstream fairing 33 to the downstream fairing 33, and the time in which the sonic waves are transmitted from the downstream fairing 33 to the upstream fairing 33. On the other hand, the wing 100 according to the present embodiment, as described hereinabove, is configured so that the shielding member 40 is disposed in the storage section 101 to block the airflow in the storage section 101. Then, as illustrated in the region enclosed by a broken line in FIG. 5, the wing 100 can clearly suppress the occurrence of pressure fluctuations in the storage section 101. Further, as shown in FIG. 7, generation of the peak of the acoustic spectrum of pressure fluctuations can be suppressed.

### Functions and effects

As described hereinabove, the wing 100 according to the present embodiment includes the main wing element 10, the flap 31 disposed on the rear side of the main wing element 10, the storage section 101 disposed in the main wing element 10 to retract the flap 31, fairings 33 each of which is disposed under the storage section 101 and covers the flap-moving mechanism 32 for moving the flap 31, and the shielding member 40 which is disposed in the storage section 101 at a position between the fairings 33 and blocks air flowing in the storage section 101 in the wing span direction.

By virtue of the above configuration, the shielding member 40 disposed in the storage section 101 can block a fluctuating airflow before pressure fluctuations occur in a feedback manner within the storage section 101. As a result, it is possible to suppress the occurrence of self-excited vibrations, and to suppress pressure fluctuations at specific frequencies are enlarged. Thus, the present embodiment makes it possible to suppress noise and airframe vibrations caused by pressure fluctuations in the storage section 101 which retracts the flap 31.

Further, the shielding member 40 is disposed downstream, along the direction of flow of air inside the storage section 101, of the center C between the fairings 33 in the wing span direction.

With this configuration, the occurrence of self-excited vibrations in the storage section 101 can be suppressed more efficiently. Specifically, when the shielding member 40 is disposed upstream of the center C between the fairings 33, pressure fluctuations traveling from the downstream side toward the upstream side collide with the shielding member 40 and consequently self-excited vibrations may be generated starting from the shielding member 40. By arranging the shielding member 40 downstream of the center C between the fairings 33, pressure fluctuations which occur on the downstream side are prevented from travelling toward the upstream side and thus the occurrence of self-excited vibrations can be suppressed more efficiently.

Further, the flap 31 is partially cut to have a slit section 31S (a first slit section) which allows the flap 31 to avoid interference with the shielding member 40 when retracted in the storage section 101. This simple configuration enables the flap 31 to be retracted in the storage section 101 without interference between the flap 31 and the shielding member 40.

Further, as illustrated in FIG. 4, the slit section 31S (the first slit section) may have an elastic member 31E disposed in the peripheral edge of the slit section 31S. With this configuration, the elastic member 31E permits a contact with the shielding member 40 when the flap 31 is retracted in the storage section. As a result, the size of the gap at the slit section 31S can be minimized, and a larger area of the flap 31 can be ensured.

Further, the shielding member 40 extends along the direction in which the flap 31 is moved. With this configuration, the flap 31 can be retracted in the storage section 101 with minimized overlapping between the flap 31 and the shielding member 40. Thus, the size of the slit section 31S formed in the flap 31 can be minimized, and a larger area of the flap 31 can be ensured.

Further, the aircraft 1 according to the present embodiment includes a wing 100. Because the wing 100 includes a shielding member 40 as described hereinabove, this configuration makes it possible to suppress noise and airframe vibrations caused by pressure fluctuations in the storage section 101 which retracts the flap 31.

While the present embodiment has illustrated one shielding member 40 being disposed between the fairings 33 as shown in FIG. 5, a plurality of shielding members 40 may be disposed between the fairings 33. Further, the shielding members 40 may be arranged not only between the two fairings 33 illustrated in FIG. 5, but also between other fairings 33 or between the fuselage 2 and the fairing 33.

### First modified example

FIG. 8 is a view illustrating an example of shielding members according to a first modified example. As illustrated, a shielding member 45 according to this modified example is partly cut to have a slit section 45S (a second slit section). The slit section 45S is a partial opening on the flap 31 side of the shielding member 45 that is formed so as to avoid interference with the flap 31 when the flap 31 is retracted in the storage section 101. Thus, when the shielding member 45 according to this modified example is used, the slit section 31S is not necessary to be provided on the flap 31.

With the above simple configuration, the flap 31 can be retracted in the storage section 101 without interference between the flap 31 and the shielding member 45. Further, the slit section 31S is not necessary to be provided on the flap 31, and thus a larger area of the flap 31 can be ensured. Incidentally, the slit section 45S disposed in the shielding member 45 allows air to flow in the storage section 101 through the slit section 45S. However, the other faces of the shielding member 45 except the slit section 45S block part of the airflow, and thus it is still possible to suppress the occurrence of self-excited vibrations and to suppress pressure fluctuations at specific frequencies are enlarged.

### Second modified example

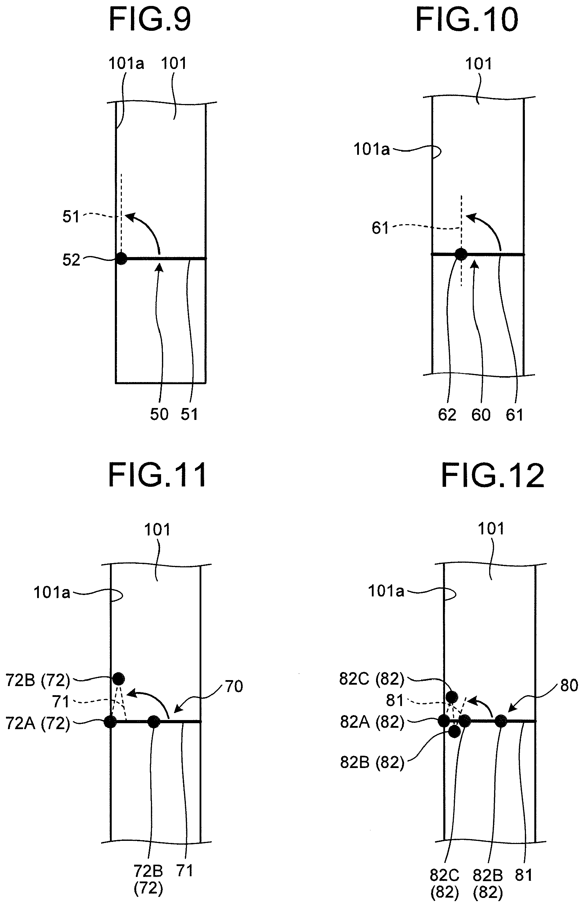

FIG. 9 to FIG. 12 are views illustrating examples of shielding members according to a second modified example. FIG. 9 to FIG. 12 are views of the inside of the storage section 101 as seen from the upper wing face side. When use is made of the shielding members 50, 60, 70, 80 illustrated in FIG. 9 to FIG. 12 which are described hereinbelow, the slit section 31S is not necessary to be provided on the flap 31.

The shielding member 50 illustrated in FIG. 9 includes a main body section 51 and a rotational section 52. The main body section 51 is a plate member which closes the storage section 101 similarly to the shielding member 40. The rotational section 52 is a hinge attached to the main body section 51. In the example illustrated in FIG. 9, the rotational section 52 is disposed at one end of the main body section 51 at a front face 101a side of the storage section 101. That is, the rotational section 52 forms one end of the shielding member 50 and is attached to the storage section 101. With this configuration, the flap 31 may be retracted in the storage section 101 in such a manner that, as indicated by a broken line in FIG. 9, the main body section 51 is rotated about the rotational section 52 to avoid interference between the main body section 51 and the flap 31. Incidentally, the rotation of the shielding member 50 can be performed via a rotational driving mechanism arranged in the main wing element 10 which is not illustrated. The driving mechanism may be one which includes an active power generator such as, for example, a motor, or may be a mechanism which generates a passive power using, for example, an elastic component such as a spring.

The shielding member 60 illustrated in FIG. 10 includes a main body section 61 and a rotational section 62. In the example illustrated in FIG. 10, the rotational section 62 is attached to an intermediate position of the main body section 61. With this configuration, similarly, the flap 31 may be retracted in the storage section 101 in such a manner that, as indicated by a broken line in FIG. 10, the main body section 61 is rotated about the rotational section 62 to avoid interference between the main body section 61 and the flap 31.

The shielding member 70 illustrated in FIG. 11 includes a main body section 71 and a plurality of rotational sections 72. In the example illustrated in FIG. 11, the rotational sections 72 include a first rotational section 72A and a second rotational section 72B. The first rotational section 72A is disposed at one end of the main body section 71 at the front face 101a side of the storage section 101. That is, the first rotational section 72A forms one end of the shielding member 70 and is attached to the storage section 101. The second rotational section 72B is disposed at an intermediate position of the main body section 71. With this configuration, the flap 31 may be retracted in the storage section 101 in such a manner that, as indicated by a broken line in FIG. 11, the main body section 71 is folded at the second rotational section 72B and is rotated about the first rotational section 72A to avoid interference between the main body section 71 and the flap 31.

The shielding member 80 illustrated in FIG. 12 includes a main body section 81 and a plurality of rotational sections 82. The shielding member 80 has one extra rotational section 82 compared to the rotational sections 72 in the shielding member 70 illustrated in FIG. 11. That is, the rotational sections 82 include a first rotational section 82A disposed at one end of the main body section 81, and a second rotational section 82B and a third rotational section 82C disposed at intermediate positions. With this configuration, the flap 31 may be retracted in the storage section 101 in such a manner that, as indicated by a broken line in FIG. 12, the main body section 81 is folded at the second rotational section 82B and the third rotational section 82C, and is further rotated about the first rotational section 82A to avoid interference between the main body section 81 and the flap 31.

As described above, the shielding members 50, 60, 70, 80 are rotated about or folded on at least one of the rotational sections 52, 62, 72, 82 so as to avoid interference with the flap 31 when the flap 31 is retracted in the storage section 101. With this configuration, the flap 31 may be retracted in the storage section 101 without interference between the flap 31 and the shielding member 50, 60, 70, 80. Further, no slits are needed in the flap 31 and also in the shielding member 50, 60, 70, 80, and thus larger areas of the flap 31 and the shielding member 50, 60, 70, 80 can be ensured.

### Reference Signs List

- 1: AIRCRAFT
- 2: FUSELAGE
- 10: MAIN WING ELEMENT
- 11: HIGH-LIFT DEVICE
- 20: SLAT DEVICE
- 21: SLAT
- 22: SLAT-MOVING MECHANISM
- 30: FLAP DEVICE
- 31: FLAP
- 31a: LEADING EDGE
- 31b: TRAILING EDGE
- 31E: ELASTIC MEMBER
- 31S: SLIT SECTION
- 32: FLAP-MOVING MECHANISM
- 33: FAIRING
- 40, 45, 50, 60, 70, 80: SHIELDING MEMBER
- 45S: SLIT SECTION
- 51, 61, 71, 81: MAIN BODY SECTION
- 52, 62, 72, 82: ROTATIONAL SECTION
- 72A, 82A: FIRST ROTATIONAL SECTION
- 72B, 82B: SECOND ROTATIONAL SECTION
- 82C: THIRD ROTATIONAL SECTION
- 100, 200: WING
- 101: STORAGE SECTION
- 101a: FRONT SIDE

## Claims

1. A wing of an aircraft comprising:
a main wing element;
a flap disposed on a rear side of the main wing element;
a storage section disposed in the main wing element to retract the flap;
fairings each of which is disposed under the storage section and covers a mechanism for moving the flap; and
a shielding member which is disposed in the storage section at a position between the fairings and blocks at least part of air flowing in the storage section in a wing span direction.

2. The wing of the aircraft according to claim 1, wherein the shielding member is disposed downstream, along a direction of flow of air inside the storage section, of a center between the fairings in the wing span direction.

3. The wing of the aircraft according to claim 1 or claim 2, wherein the flap is partially cut to have a first slit section which allows the flap to avoid interference with the shielding member when retracted in the storage section.

4. The wing of the aircraft according to claim 3, wherein the first slit section has an elastic member disposed in a peripheral edge of the first slit section.

5. The wing of the aircraft according to claim 1 or claim 2, wherein the shielding member is partly cut to have a second slit section which allows the shielding member to avoid interference with the flap when the flap is retracted in the storage section.

6. The wing of the aircraft according to claim 1 or claim 2, wherein the shielding member is configured to be rotated about or folded on at least one rotational section so as to avoid interference with the flap when the flap is retracted in the storage section.

7. The wing of the aircraft according to any one of claim 1 to claim 6, wherein the shielding member extends along a direction in which the flap is moved.

8. An aircraft comprising the wing of the aircraft described in any one of claim 1 to claim 7.
